# EUROPÄISCHE PATENTSCHRIFT

(11) **EP 2 953 424 B1**
(45) Veröffentlichungstag und Bekanntmachung des Hinweises auf die Patenterteilung: **13.09.2017**
(21) Anmeldenummer: 14171216.6
(22) Anmeldetag: 04.06.2014
(51) Int. Cl.: H01F 5/00, H01F 7/20, H01F 3/10, H05B 6/12

(54) **Induktionsheizspule und Induktionsheizeinrichtung**
Induction heating coil and induction heating device
Bobine de chauffage à induction et dispositif de chauffage à induction

(43) Veröffentlichungstag der Anmeldung: 09.12.2015
(73) Patentinhaber: E.G.O. Elektro-Gerätebau GmbH, 75038 Oberderdingen (DE)
(72) Erfinder: Thimm, Wolfgang, Dr., 76137 Karlsruhe (DE)
(74) Vertreter: Patentanwälte Ruff, Wilhelm, Beier, Dauster & Partner mbB

(56) Entgegenhaltungen:
- EP-A1- 0 808 080
- EP-A1- 2 511 649
- DE-A1-102012 220 775
- JP-A- 2008 166 088

## Beschreibung

Die Erfindung betrifft eine Induktionsheizspule und eine Induktionsheizeinrichtung mit einer solchen Induktionsheizspule.

Induktionsheizspulen dienen zur induktiven Erwärmung von Kochgefäßen. Herkömmliche Induktionsheizspulen weisen eine bestrombare Leiterwicklung zur Erzeugung eines magnetischen Wechselfeldes und so genannte Feldführungs-Ferrite, die dazu dienen, magnetische Streufelder auf einer dem Kochgefäß abgewandten Seite der Induktionsheizspule zu reduzieren.

Die DE 10 2012 220 775 A1 zeigt eine Induktionsheizspule mit einer bestrombaren Leiterwicklung und einer Fokussierungseinheit, die Fokussierungselemente aufweist, die aus keilförmigen Ferriten gebildet sind. Die Fokussierungselemente dienen zu einer Formung des mittels der Leiterwicklung erzeugten magnetischen Wechselfelds.

Der Erfindung liegt die Aufgabe zugrunde, eine Induktionsheizspule und eine Induktionsheizeinrichtung mit einer solchen Induktionsheizspule zur Verfügung zu stellen, die verglichen mit herkömmlichen Ausführungsformen eine verbesserte Energieeffizienz und/oder eine gleichmäßigere Wärmeverteilung aufweisen.

Die Erfindung löst diese Aufgabe durch eine Induktionsheizspule nach Anspruch 1 und eine Induktionsheizeinrichtung nach Anspruch 9.

Die Induktionsheizspule ist für Induktionskochfelder vorgesehen und zur induktiven Erwärmung eines Kochgefäßes ausgebildet. Insoweit sei auch auf die einschlägige Fachliteratur verwiesen.

Die Induktionsheizspule weist herkömmlich mindestens eine bestrombare Leiterwicklung zur Erzeugung eines magnetischen Wechselfeldes auf. Insoweit sei ebenfalls auf die einschlägige Fachliteratur verwiesen.

Die Induktionsheizspule weist weiter mindestens ein Halbach-Array bzw. eine Hallbach-Anordnung auf, das bzw. die räumlich derart angeordnet ist, dass sich ein mittels des mindestens einen Halbach-Arrays bzw. der Halbach-Anordnung erzeugter magnetischer Fluss, insbesondere unabhängig von dem mittels der Leiterwicklung erzeugten magnetischen Wechselfeld, auf einer dem Kochgefäß zuzuwendenden Seite des mindestens einen Halbach-Arrays von einem mittels des mindestens einen Halbach-Arrays erzeugten magnetischen Fluss auf einer dem Kochgefäß abzuwendenden Seite des mindestens einen Halbach-Arrays unterscheidet. Ein Halbach-Array setzt sich aus Segmenten von Permanentmagneten zusammen, deren Magnetisierungsrichtung gegeneinander jeweils um 90° in Richtung der Längsachse des Halbach-Arrays gekippt ist. Auf diese Weise lässt sich eine seitenabhängige Flussverstärkung erzielen. Im Übrigen sei auch auf die einschlägige Fachliteratur betreffend Hallbach-Arrays verwiesen.

Erfindungsgemäß werden die herkömmlichen Feldführungs-Ferrite durch Halbach-Arrays ersetzt, wobei Messungen ergeben haben, dass sich auf diese Weise eine Wirkungsgradverbesserung und eine homogenere Wärmeverteilung erzielen lässt.

Das mindestens eine Halbach-Array kann eine ganzzahlige Anzahl von beispielsweise 3, 5, 7, 9 oder 11 Permanentmagnetsegmenten aufweisen.

Die Leiterwicklung kann herkömmlich in einer Wicklungsebene spiralförmig gewickelt sein. Die Wicklungsebene kann beispielsweise parallel zu einer Kochflächenoberflächenebene sein. Das mindestens eine Halbach-Array kann auf derjenigen Seite der Wicklungsebene angeordnet sein, die im Betrieb der Induktionsheizspule vom dem Kochgefäß abgewandt ist, d.h. das mindestens eine Halbach-Array ist aus Sicht des Kochgefäßes hinter der Leiterwicklung angeordnet.

Das mindestens eine Halbach-Array kann ein lineares Halbach-Array sein.

Eine Längsrichtung des mindestens einen linearen Halbach-Arrays kann parallel zur Wicklungsebene verlaufen.

Die Induktionsheizspule kann eine Mehrzahl, beispielsweise zwischen 4 und 10, von linearen Halbach-Arrays aufweisen, wobei jeweiligen Längsrichtungen der linearen Halbach-Arrays radial zu einem Mittelpunkt der Leiterwicklung verlaufen können bzw. auf eine Achse, die durch den Mittelpunkt der Leiterwicklung verläuft, senkrecht stehen können. Die Halbach-Arrays können in einer Ebene angeordnet sein, die parallel zur Wicklungsebene ist.

Der mittels des mindestens einen Halbach-Arrays erzeugte magnetische Fluss kann auf der dem Kochgefäß zuzuwendenden Seite des mindestens einen Halbach-Arrays größer sein als der mittels des mindestens einen Halbach-Arrays erzeugte magnetische Fluss auf der dem Kochgefäß abzuwendenden Seite des mindestens einen Halbach-Arrays.

Das mindestens eine Halbach-Array kann auf einen Isolator aufgeklebt sein.

Die Induktionsheizeinrichtung weist eine oben genannte Induktionsheizspule und eine Steuereinrichtung auf, die dazu ausgebildet ist, ein Steuersignal, beispielsweise eine Steuerspannung, für die Leiterwicklung zu erzeugen. Das Steuersignal kann herkömmlich erzeugt werden, insoweit sei auch auf die einschlägige Fachliteratur verwiesen.

Die Induktionsheizeinrichtung kann ein Wärmeisolationselement aufweisen, das dazu ausgebildet ist, einen Wärmefluss von dem zu erwärmenden Kochgefäß in Richtung des mindestens einen Halbach-Arrays zu reduzieren, um eine Überhitzung des Halbach-Arrays zu verhindern.

Die Induktionsheizspule bzw. Induktionsspule ist für den Einsatz in einem Kochfeld ausgebildet. Die Induktionsheizspule weist eine Anordnung von Ferriten, beispielsweise in Form von Permanentmagnetsegmenten, auf, die einer Geometrie einer komplexen Anordnung folgt, wobei sich aufgrund der Anordnung magnetische Feldstärken auf der dem Kochgefäß zugewandten und der dem Kochgefäß abgewandten Seite im gleichen Abstand voneinander unterscheiden. Die magnetische Feldstärke bzw. der magnetische Fluss auf der Seite, die dem Kochgefäß zugewandt ist, kann die Höhere sein.

Die Anordnung kann nach den Regeln für eine Halbach-Anordnung vorgenommen sein.

Ein Kochfeld, das eine solche Induktionsheizspule aufweist, kann eine WOK-Form aufweisen.

Die Induktionsheizspule kann derart hergestellt werden, dass die magnetische Anordnung der Permanentmagnetsegmente automatisch erfolgt, wobei Feldstärken auf Ober- und Unterseite der Induktionsheizspule zur Qualitätskontrolle gemessen werden. Die Qualitätskontrolle kann eine optische Messung der Ferritanordnung bzw. Permanentmagnetsegmentanordnung umfassen.

Die Ferrite bzw. Permanentmagnetsegmente können auf einen Isolator, beispielsweise Mikanit, Kunststoff oder Keramik, geklebt werden. Der Klebeprozess kann durch thermische Aktivierung gesteuert werden. Der Klebeprozess kann auch durch Strahlung, insbesondere UV-Strahlung, gesteuert werden.

Die Ferrite bzw. Permanentmagnetsegmente können in ein Formteil eingelegt werden, welches die Halbach-Anordnung vorgibt. Das Formteil kann nach Anbringen der Ferrite bzw. Permanentmagnetsegmente, insbesondere durch Kleben, wieder zur Herstellung einer weiteren Induktionsheizspule verwendet werden.

Die Ferrite können in eine Form gepresst werden. Hierbei kann beispielweise eine Trockenpressung stattfinden und anschließend kein Sinterprozess bei Temperaturen über 200°C stattfinden. Das Pressteil kann neben den Ferriten noch einen thermischen Isolationswerkstoff enthalten. Das Pressteil kann mit einem Stoff, beispielsweise Silikon, versehen sein, der eine Wasseraufnahme des Pressteils verringert. Das Pressteil ist typischerweise mechanisch stabil und kann als Kochfeldträger fungieren. Neben den Ferriten kann auch noch der die Leiterwicklung bildende Leiter eingepresst werden.

Auf derjenigen Leiterseite, auf der sich keine Ferrite befinden, kann eine Wärmedämmung vorgesehen sein, die dick genug ist, um auch während einer typischen Betriebsdauer keine Temperaturerhöhung von mehr als 200 K, vorzugsweise 120 K, zuzulassen.

Die Erfindung wird nachfolgend unter Bezugnahme auf die Zeichnungen detailliert beschrieben. Hierbei zeigen schematisch:
- Fig. 1: eine Induktionsheizeinrichtung mit einer Induktionsheizspule in einer Draufsicht und
- Fig. 2: einen Ausschnitt der in Fig. 1 gezeigten Induktionsheizeinrichtung in seitlicher Darstellung.

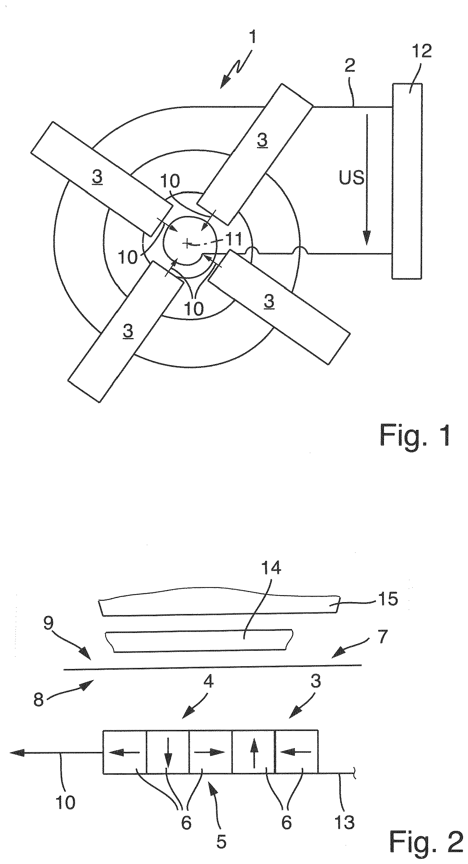

Fig. 1 zeigt schematisch eine Induktionsheizeinrichtung mit einer Induktionsheizspule 1 und einer Steuereinrichtung 12, die dazu ausgebildet ist, ein Steuersignal in Form einer Steuerspannung US für eine Leiterwicklung 2 der Induktionsheizspule 1 zu erzeugen. Die Steuereinrichtung kann beispielsweise ein herkömmlicher Frequenzumrichter sein.

Die Induktionsheizeinrichtung ist Teil eines nicht näher dargestellten Induktionskochfelds. Es versteht sich, dass das Induktionskochfeld auch mehrere Induktionsheizeinrichtungen aufweisen kann. Die Induktionsheizeinrichtung dient zur Erwärmung eines Kochgefäßes 15 (siehe Fig. 2).

Die Induktionsheizspule 1 weist neben der Leiterwicklung 2 zur Erzeugung eines magnetischen Wechselfeldes eine Anzahl von linearen Halbach-Arrays 3 auf, die derart angeordnet sind, dass sich ein mittels der Halbach-Arrays 3 erzeugter magnetischer Fluss auf einer dem Kochgefäß 15 zuzuwendenden Seite 4 (siehe Fig. 2) der Halbach-Arrays 3 von einem mittels der Halbach-Arrays 3 erzeugten magnetischen Fluss auf einer dem Kochgefäß 15 abzuwendenden Seite 5 der Halbach-Arrays 3 unterscheidet. Der magnetische Fluss auf der dem Kochgefäß 15 zuzuwendenden Seite 4 kann größer sein als der magnetische Fluss auf der dem Kochgefäß 15 abzuwendenden Seite 5.

In Fig. 1 sind vier Halbach-Arrays 3 gezeigt. Es versteht sich, dass auch mehr oder weniger Halbach-Arrays 3 vorgesehen sein können.

Fig. 2 zeigt einen exemplarischen Ausschnitt der in Fig. 1 gezeigten Induktionsheizeinrichtung in seitlicher Darstellung.

Wie in Fig. 2 dargestellt, weist ein jeweiliges Halbach-Array 3 eine Anzahl von 5 Permanentmagnetsegmenten 6 auf, die in herkömmlicher Art und Weise derart zueinander ausgerichtet sind, dass der magnetische Fluss auf der Seite 4 größer ist als der magnetische Fluss auf der Seite 5 des Halbach-Arrays 3.

Die Leiterwicklung 2 ist in einer Wicklungsebene 7 spiralförmig gewickelt, wobei die Halbach-Arrays 3 auf derjenigen Seite 8 der Wicklungsebene 7 angeordnet sind, die im Betrieb der Induktionsheizspule 1 dem Kochgefäß 15 abgewandt ist. Eine Seite 9 der Wicklungsebene 7 ist im Betrieb der Induktionsheizspule 1 dem Kochgefäß 15 zugewandt.

Eine jeweilige Längsrichtung 10 der Halbach-Arrays 3 verläuft parallel zur Wicklungsebene 7, wobei die Halbach-Arrays 3 in Form von Speichen eines Wagenrads in einer Ebene parallel zur Wicklungsebene 7 angeordnet sind, siehe hierzu auch Fig. 1.

Die Halbach-Arrays 3 sind auf einen elektrischen Isolator 13 aufgeklebt.

Ein Wärmeisolationselement 14 ist oberhalb der Leiterwicklung 2 angeordnet und ist dazu ausgebildet ist, einen Wärmefluss von dem zu erwärmenden Kochgefäß 15 in Richtung der Halbach-Arrays 3 zu reduzieren. Es versteht sich, dass zwischen Kochgefäß 15 und Wärmeisolationselement 14 weitere Elemente vorhanden sein können, insbesondere eine Glaskeramikoberfläche.

## Patentansprüche

1. Induktionsheizspule (1) für Induktionskochfelder, wobei die Induktionsheizspule (1) zur Erwärmung eines Kochgefäßes (15) ausgebildet ist und aufweist:
- eine bestrombare Leiterwicklung (2) zur Erzeugung eines magnetischen Wechselfeldes, **dadurch gekennzeichnet, dass** die Induktionsheizspule (1) weiter aufweist:
- mindestens ein Halbach-Array (3), das derart angeordnet ist, dass sich ein mittels des Halbach-Arrays (3) erzeugter magnetischer Fluss auf einer dem Kochgefäß (15) zuzuwendenden Seite (4) des Halbach-Arrays (3) von einem mittels des Halbach-Arrays (3) erzeugten magnetischen Fluss auf einer dem Kochgefäß (15) abzuwendenden Seite (5) des Halbach-Arrays (3) unterscheidet.

2. Induktionsheizspule (1) nach Anspruch 1, **dadurch gekennzeichnet, dass**
- Halbach-Array (3) eine Anzahl von 3, 5, 7, 9 oder 11 Permanentmagnetsegmenten (6) aufweist.

3. Induktionsheizspule (1) nach einem der vorhergehenden Ansprüche, **dadurch gekennzeichnet, dass**
- die Leiterwicklung (2) in einer Wicklungsebene (7) spiralförmig gewickelt ist, wobei das Halbach-Array (3) auf derjenigen Seite (8) der Wicklungsebene (7) angeordnet ist, die im Betrieb der Induktionsheizspule (1) dem Kochgefäß (15) abgewandt ist.

4. Induktionsheizspule (1) nach einem der vorhergehenden Ansprüche, **dadurch gekennzeichnet, dass**
- das Halbach-Array ein lineares Halbach-Array (3) ist.

5. Induktionsheizspule (1) nach Anspruch 3 und 4, **dadurch gekennzeichnet, dass**
- eine Längsrichtung (10) des linearen Halbach-Arrays (3) parallel zur Wicklungsebene (7) verläuft.

6. Induktionsheizspule (1) nach Anspruch 5, **dadurch gekennzeichnet, dass**
- die Induktionsheizspule (1) eine Mehrzahl von linearen Halbach-Arrays (3) aufweist, wobei jeweiligen Längsrichtungen (10) der linearen Halbach-Arrays (3) radial zu einem Mittelpunkt (11) der Leiterwicklung (2) verlaufen.

7. Induktionsheizspule (1) nach einem der vorhergehenden Ansprüche, **dadurch gekennzeichnet, dass**
- der mittels des Halbach-Arrays (3) erzeugte magnetische Fluss auf der dem Kochgefäß (15) zuzuwendenden Seite (4) des Halbach-Arrays (3) größer ist als der mittels des Halbach-Arrays (3) erzeugte magnetische Fluss auf der dem Kochgefäß (15) abzuwendenden Seite (5) des Halbach-Arrays (3).

8. Induktionsheizspule (1) nach einem der vorhergehenden Ansprüche, **dadurch gekennzeichnet, dass**
- das Halbach-Array (3) auf einen Isolator (13) aufgeklebt ist.

9. Induktionsheizeinrichtung, aufweisend:
- eine Induktionsheizspule (1) nach einem der vorhergehenden Ansprüche und
- eine Steuereinrichtung (12), die dazu ausgebildet ist, ein Steuersignal (US) für die Leiterwicklung (2) zu erzeugen.

10. Induktionsheizeinrichtung nach Anspruch 9, **gekennzeichnet durch**
- ein Wärmeisolationselement (14), das dazu ausgebildet ist, einen Wärmefluss von dem zu erwärmenden Kochgefäß (15) in Richtung des Halbach-Arrays (3) zu reduzieren.

## Claims

1. Induction heating coil (1) for induction cooktops, wherein the induction heating coil (1) is configured for heating of a cooking vessel (15) and comprises:
- an energizable conductor winding (2) for generating an alternating magnetic field, **characterized in that** the induction heating coil (1) further comprises:
- at least one Halbach array (3) arranged such that a magnetic flux generated using the Halbach array (3) on a side (4) of the Halbach array (3) to be facing the cooking vessel (15) differs from a magnetic flux generated using the Halbach array (3) on a side (5) of the Halbach array (3) to be facing away from the cooking vessel (15).

2. Induction heating coil (1) according to claim 1, **characterized in that**
- the Halbach array (3) includes a number of 3, 5, 7, 9 or 11 permanent magnet segments (6).

3. Induction heating coil (1) according to any of the preceding claims, **characterized in that**
- the conductor winding (2) has a helical winding in a winding plane (7), wherein the Halbach array (3) is disposed on that side (8) of the winding plane (7) that is facing away from the cooking vessel (15) during operation of the induction heating coil (1).

4. Induction heating coil (1) according to any of the preceding claims, **characterized in that**
- the Halbach array is a linear Halbach array (3).

5. Induction heating coil (1) according to claim 3 and 4, **characterized in that**
- a longitudinal direction (10) of the linear Halbach array (3) extends in parallel to the winding plane (7).

6. Induction heating coil (1) according to claim 5, **characterized in that**
- the induction heating coil (1) includes a plurality of linear Halbach arrays (3), wherein the respective longitudinal directions (10) of the linear Halbach arrays (3) extend radially in relation to a central point (11) of the conductor winding (2).

7. Induction heating coil (1) according to any of the preceding claims, **characterized in that**
- the magnetic flux generated using the Halbach array (3) on the side (4) of the Halbach array (3) to be facing the cooking vessel (15) is larger than the magnetic flux generated using the Halbach array (3) on the side (5) of the Halbach array (3) to be facing away from the cooking vessel (15).

8. Induction heating coil (1) according to any of the preceding claims, **characterized in that**
- the Halbach array (3) is adhesively bonded to an insulator (13).

9. Induction heating device, comprising:
- an induction heating coil (1) according to any of the preceding claims, and
- a controller device (12) configured to generate a control signal (US) for the conductor winding (2).

10. Induction heating device according to claim 9, **characterized by**
- a heat insulating element (14) configured to reduce a heat flux from the cooking vessel (15) to be heated towards the Halbach array (3).

## Revendications

1. Bobine de chauffage à induction (1) pour plaque de cuisson à induction, dans laquelle la bobine de chauffage à induction (1) est conçue pour chauffer un récipient de cuisson (15) et comporte :
- un enroulement conducteur (2) pouvant être alimenté en courant, destiné à générer un champ magnétique alternatif,
**caractérisée en ce que** la bobine de chauffage à induction (1) comporte en outre :
- au moins un réseau Halbach (3) qui est agencé de manière à ce qu'un flux magnétique généré au moyen du réseau Halbach (3) sur un côté (4) du réseau Halbach (3) qui est tourné vers le récipient de cuisson (15) soit différent d'un flux magnétique généré au moyen du réseau Halbach (3) sur un côté (5) du réseau Halbach (3) qui est tourné en sens opposé au récipient de cuisson (15).

2. Bobine de chauffage à induction (1) selon la revendication 1, **caractérisée en ce que**
- le réseau Halbach (3) comporte un nombre de segments d'aimant permanent (6) égal à 3, 5, 7, 9 ou 11.

3. Bobine de chauffage à induction (1) selon l'une quelconque des revendications précédentes, **caractérisée en ce que**
- l'enroulement conducteur (2) est enroulé en spirale dans un plan d'enroulement (7), dans lequel le réseau Halbach (3) est disposé sur le côté (8) du plan d'enroulement (7) qui est tourné en direction opposée au récipient de cuisson (15) lors du fonctionnement de la bobine de chauffage à induction (1).

4. Bobine de chauffage à induction (1) selon l'une quelconque des revendications précédentes, **caractérisée en ce que**
- le réseau Halbach est un réseau Halbach (3) linéaire.

5. Bobine de chauffage à induction (1) selon les revendications 3 et 4, **caractérisée**
- **en ce qu'**une direction longitudinale (10) du réseau Halbach (3) linéaire s'étend parallèlement au plan d'enroulement (7).

6. Bobine de chauffage à induction (1) selon la revendication 5, **caractérisée en ce que**
- la bobine de chauffage à induction (1) comporte une pluralité de réseaux Halbach (3) linéaires, dans laquelle les directions longitudinales respectives (10) du réseau Halbach (3) linéaire s'étendent radialement par rapport à un centre (11) de l'enroulement conducteur (2).

7. Bobine de chauffage à induction (1) selon l'une quelconque des revendications précédentes, **caractérisée en ce que**
- le flux magnétique généré au moyen du réseau Halbach (3) sur le côté (4) du réseau Halbach (3) qui est tourné vers le récipient de cuisson (15) est supérieur au flux magnétique généré au moyen du réseau Halbach (3) sur le côté (5) du réseau Halbach (3) qui est tourné en sens opposé au récipient de cuisson (15).

8. Bobine de chauffage à induction (1) selon l'une quelconque des revendications précédentes, **caractérisée en ce que**
- le réseau Halbach (3) est collé sur un isolant (13).

9. Dispositif de chauffage à induction, comportant :
- une bobine de chauffage à induction (1) selon l'une quelconque des revendications précédentes, et
- un dispositif de commande (12) qui est conçu pour générer un signal de commande (US) destiné à l'enroulement conducteur (2).

10. Dispositif de chauffage à induction selon la revendication 9, **caractérisé par**
- un élément d'isolation thermique (14) qui est conçu pour réduire un flux thermique provenant du récipient de cuisson (15) à chauffer dans la direction du réseau Halbach (3).
